# EUROPÄISCHE PATENTANMELDUNG

(11) **EP 2 386 976 A1**
(43) Veröffentlichungstag der Anmeldung: **16.11.2011**
(21) Anmeldenummer: 11165674.0
(22) Anmeldetag: 11.05.2011
(51) Int. Cl.: G06F 21/20, G06F 3/048, G06F 21/00, H04M 1/663

(54) **Touch Screen Bildschirm mit Funktionsverriegelung**

(30) Priorität: 14.05.2010 DE 102010020474
(71) Anmelder: Deutsche Telekom AG, 53113 Bonn (DE)
(72) Erfinder: Hennings, Lennart, 33611 Bielefeld (DE)
(74) Vertreter: Braun-Dullaeus, Karl-Ulrich

(57) **Zusammenfassung**

Verfahren zur Reaktivierung einer Funktionalität auf einem gegenüber Berührungen gesperrten Touch Screen Bildschirm eines mobilen Endgerätes, insbesondere eines Mobiltelefons, wobei auf dem Bildschirms ein berührungsempfindliches Reaktivierungsicon in einem optisch abgegrenzten Feld eingeblendet ist,
wobei das Reaktivierungsicon mit einer berührenden Geste über eine der Grenzen hinaus in einen zuvor gesperrten Bereich des Touch Screen Bildschirm gezogen und dort los gelassen wird, wobei das Loslassen die Funktionalität aktiviert,

## Beschreibung

Die Erfindung betrifft Verfahren zur Reaktivierung einer Funktionalität auf einem gegenüber Berührungen gesperrten Touch Screen Bildschirm eines mobilen Endgerätes, insbesondere eines Mobiltelefons, wobei auf dem Bildschirm ein berührungsempfindliches Reaktivierungsicon in einem optisch abgegrenzten Feld eingeblendet ist. Die Erfindung betrifft zudem ein Endgerät, insbesondere ein Mobiltelefon, zur Umsetzung des Verfahrens.

Bekanntermaßen haben Mobiltelefone und insbesondere solche mit einem Touch Screen Bildschirm die Möglichkeit, die Eingabe zu sperren, um ein ungewolltes Aufrufen von Funktionen zu verhindern. Während bei einer mechanischen Tastatur die Entriegelung meist über das Drücken einer Tastenkombination funktioniert, werden Geräte mit Touch Screen Bildschirm meist durch eine verschiebende Geste, beispielsweise das Verschieben eines Schalters, entsperrt. Dabei bietet gerade das Entsperren die Möglichkeit für eine besonders symbolhafte Gestaltung. So ist es beispielsweise bekannt, einen den Bildschirm verdeckenden symbolisierten Rollladen durch hochschieben zu öffnen. Allen bekannten Gesten ist aber gemeinsam, dass sie sich auf ein optisch abgegrenztes Feld beschränken. Zudem reaktivieren alle bekannten Verfahren jeweils das komplette Funktionsspektrum des Endgerätes, was mitunter nicht unbedingt gewünscht ist,

Aufgabe der Erfindung ist es nunmehr, eine einfache Möglichkeit zu schaffen, den Bedienkomfort bei dem Aufheben der Funktionsverriegelung und damit die Attraktivität der Endgeräte für den Nutzer bei hoher funktionaler Sicherheit weiter zu erhöhen.

Gelöst wird diese Aufgabe durch das Verfahren nach Anspruch 1 und durch das Endgerät nach Anspruch 8. Die Unteransprüche beschreiben vorteilhafte Ausführungsformen.

Der Grundgedanke der Erfindung besteht darin, die Möglichkeit zu eröffnen, im Zuge der Aufhebung der Funktionsverriegelung eine oder mehrere über das Endgerät abrufbare Funktionalitäten unmittelbar ansprechen zu können. Erfindungsgemäß wird das dadurch realisiert, dass das Reaktivierungsicon von seinem "Stammplatz" mit einer berührenden Geste über eine seiner ursprünglichen Grenzen hinaus in einen zuvor gesperrten Bereich des Touch Screen Bildschirm gezogen und dort los gelassen wird. Das Loslassen des Reaktivierungsicons aktiviert dann die darunter befindliche Funktionalität. Auf diese Weise kann der Nutzer über das Verschieben des Reaktivierungsicons eine gewünschte Funktionalität abrufen.

Zunächst ist es möglich, das Reaktivierungsicon an eine Stelle auf dem Bildschirm zu ziehen, wo es mit dem Losgelassen alle über den Bildschirm abrufbaren Funktionalitäten aktiviert. Eine solche Stelle kann ein besonders dafür vorgesehenes Feld aber auch ein ansonsten nicht belegter Teil des Bildschirms sein. Auf diese Weise wird das Endgerät quasi komplett entriegelt und steht zur normalen Bedienung über den Touch Screen zur Verfügung.

In einer besonders zu bevorzugenden Ausführungsform wird jedoch mit dem Ziehen und Losgelassen des Reaktivierungsicons eine speziell Funktion aufgerufen. Dazu ist dieser speziellen Funktionalität, die der Nutzer wünscht zu reaktivierenden, ein auf dem gesperrten Touch Screen Bildschirm sichtbar aber um die Sperrung zu symbolisieren gegebenenfalls etwas verschleiert dargestelltes Funktionsicon zugeordnet. Diese spezielle Funktionalität wird nun selektiv dadurch aktiviert, dass das Reaktivierungsicon auf das Funktionsicon gezogen und dort losgelassen wird. Nun ist nur diese Funktionalität für den Nutzer freigegeben, während alle anderen Funktionalitäten nach wie vor gesperrt sind. Diese selektive Freigabe kann durch eine besondere Art der Darstellung des Funktionsicons, beispielsweise durch Entfernen der Verschleierung, angezeigt werden. Nach der selektiven Freigabe kann das Reaktivierungsicon automatisch wieder auf seinem alten Stammplatz auf dem Bildschirm positioniert werden.

Die Möglichkeit der selektiven Freigabe hat auch den Vorteil, dass unkritische Funktionalitäten entsperrt sind, während kritische blockiert bleiben. Dabei werden solche Funktionalitäten als kritisch erachtet, deren Aufruf einen Verbindungsaufbau initiiert. Als unkritisch werden hingegen lokale Anwenderprogramme, wie Spiele, Dateiverwaltungen und Ähnliches, angesehen.

Besonders vorteilhaft weil komfortabel zu bedienen ist es, wenn die vom Nutzer ausgewählte spezielle Funktionalität mit dem Loslassen des Reaktivierungsicons sofort ausgeführt wird, ohne dass es dazu weiterer Eingaben durch den Nutzer bedarf. Die zunächst gesperrte Funktionalität wird auf diese Weise sofort gestartet. Diese Variante hat besondere Vorzüge, wenn die spezielle zu aktivierende Funktionalität der Abruf einer Textnachricht, insbesondere einer Email, einer SMS oder einer MMS, ist, deren Eingang auf dem Bildschirm angezeigt wird. Der Nutzer braucht dann nur das Reaktivierungsicon auf die Anzeige zu schieben und schon öffnet sich die Liste der eingegangenen Nachrichten.

Besonders vorteilhaft ist es, wenn der Eingang einer solchen Nachricht, die eventuell von einem besonders priorisierten Teilnehmer kommt, durch ein eigenes der einen Textnachricht individuell zugeordnetes Infoicon angezeigt wird. Beim Loslassen des Reaktivierungsicons über dem Infoicon kann dann der komplette Inhalt der Textnachricht unmittelbar auf dem Bildschirm präsentiert werden.

Vorteilhafterweise wird mit dem öffnen der Nachrichtenliste oder mit dem Öffnen der Einzelnachricht nicht nur die Anzeige bewirkt, sondern die Funktionalität gleich so weit entsperrt, dass die Möglichkeit des Verbindungsaufbaus gegeben ist Demgemäss kann der Nutzer sofort auf eine Nachrichten antworten oder sie weiterleiten.

Um die Attraktivität und den Bedienkomfort weiter zu erhöhen, wird das Reaktivierungsicon insbesondere in seiner Form und/oder seiner Farbe so gestaltet, dass es auf dem gesperrten Bildschirm eine besondere Augenfälligkeit aufweist. Es kann beispielsweise als einziges farbiges Icon auf dem ansonsten in schwarz/weiß gehaltenen gesperrten Bildschirm erscheinen und seinen "Stammplatz" an dominanter Position, beispielsweise an der oberen Kante des Bildschirms mittig haben.

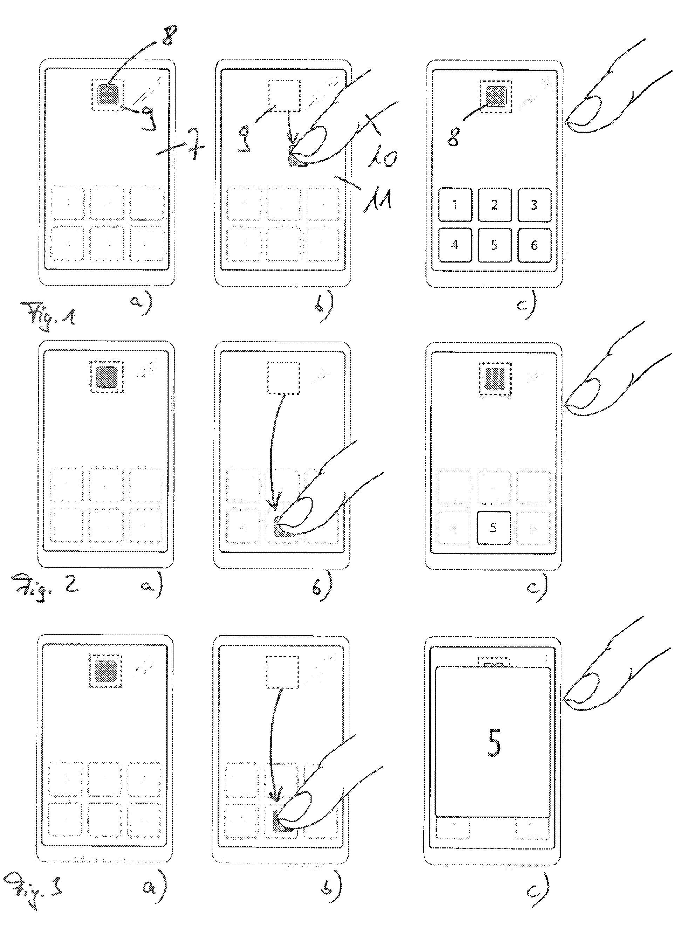

Weitere Merkmale und Vorteile ergeben sich aus der nachfolgenden Beschreibung anhand der Figuren 1 bis 3, die jeweils einen Funktionsablauf symbolisieren. Es zeigen:
- **Figur 1**: die Reaktivierung aller Funktionalitäten,
- **Figur 2**: die Reaktivierung einer speziellen Funktionalität und
- **Figur 3**: den unmittelbaren Aufruf mit Reaktivierung einer speziellen Funktionalität.
Alle Figuren zeigen schematisch ein zur Umsetzung des Verfahrens geeignetes Mobiltelefon mit Touch Screen 7, das eine Funktion "gesperrter Status" realisiert, in welcher der Touch Screen Bildschirm unsensibel gegenüber Berührungen ist. Der gesperrte Status ist in den Figuren dadurch gekennzeichnet, dass die Funktionsicons 1 bis 6 hell dargestellt sind. Wie aus Figur 1a, die den "gesperrten Status" symbolisiert, ersichtlich, ist am oberen Rand des Bildschirms 7 ein Reaktivierungsicon 8 in einem abgegrenzten Bereich 9 (unterbrochene Linie) angeordnet. Dieser prominente Platz auf dem Bildschirm 7 ist der jederzeit auffindbare "Stammplatz" des Reaktivierungsicons 8, an den es nach einer Verschiebung automatisch wieder zurück kehrt.

Erfindungsgemäß realisiert das Mobiltelefon eine Entriegelungsfunktion derart, dass das Reaktivierungsicon mit einer berührenden Geste mittels eines Fingers 10 über eine Grenze des Bereiches 9 hinausziehbar ist (Figur 1b). Wir das über die Grenze des Bereiches 9 hinausgezogene Reaktivierungsicon in einen zuvor gesperrten Bereich 11 des Touch Screen Bildschirm gezogen und dort los gelassen, werden in diesem Fall alle über die Funktionsicons 1 bis 6 abrufbaren Funktionalitäten des Endgerätes aktiviert. Das ist dadurch symbolisiert, dass die Funktionsicons 1 bis 6 aufleuchten. Nach dem Loslassen des Reaktivierungsicons 8 kehrt dieses an seinen Stammplatz zurück (Figur 1c). Das Loslassen des Reaktivierungsicons 8 aktiviert in diesem Fall alle über den Bildschirm aufrufbaren Funktionalitäten .

Im Fall der Figur 2 wird das Reaktivierungsicons 8 ausgehend von derselben Ausgangssituation nach Figur 2a über den durch den Pfeil dargestellten Weg auf ein spezielles Funktionsicon 5 gezogen (Figur 2b). Nach dem Loslassen ist diese Funktionalität 5 reaktiviert, was in Figur 2c durch das aufleuchtende Funktionsicon 5 angedeutet ist. Des Reaktivierungsicon 8 kehrt wiederum an seinen Stammplatz zurück.

Im Fall der Figur 3 wird das Reaktivierungsicons 8 ausgehend von derselben Ausgangssituation nach Figur 3a über den durch den Pfeil dargestellten Weg wie vorangehend beschrieben auf das spezielle Funktionsicon 5 gezogen (Figur 3b). Nach dem Loslassen ist diese Funktionalität 5 nicht nur reaktiviert, sondern wird sofort ausgeführt, was in Figur 3c durch das aufleuchtende und nahezu den kompletten Bildschirm bedeckende Funktionsicon 5 angedeutet ist.

## Patentansprüche

1. Verfahren zur Reaktivierung einer Funktionalität auf einem gegenüber Berührungen gesperrten Touch Screen Bildschirm eines mobilen Endgerätes, insbesondere eines Mobiltelefons, wobei auf dem Bildschirm ein berührungsempfindliches Reaktivierungsicon in einem optisch abgegrenzten Feld eingeblendet ist,
**dadurch gekennzeichnet,**
**dass** das Reaktivierungsicon mit einer berührenden Geste über eine der Grenzen hinaus in einen zuvor gesperrten Bereich des Touch Screen Bildschirm gezogen und dort los gelassen wird, wobei das Loslassen die Funktionalität aktiviert.

2. Verfahren nach Anspruch 1,
**dadurch gekennzeichnet,**
**dass** mit dem Losgelassen des Reaktivierungsicons alle über den Bildschirm abrufbaren Funktionalitäten aktiviert werden.

3. Verfahren nach Anspruch 1,
**dadurch gekennzeichnet,**
**dass** einer speziellen zu aktivierenden Funktionalität ein auf dem gesperrten Touch Screen Bildschirm dargestelltes Funktionsicon zugeordnet ist, wobei diese spezielle Funktionalität selektiv aktiviert wird, indem das Reaktivierungsicon auf das Funktionsicon gezogen und dort losgelassen wird.

4. Verfahren nach Anspruch 3,
**dadurch gekennzeichnet,**
**dass** die spezielle Funktionalität durch Loslassen des Reaktivierungsicons sofort ausgeführt wird.

5. Verfahren nach Anspruch 4,
**dadurch gekennzeichnet,**
**dass** die spezielle zu aktivierende Funktionalität der Abruf einer Textnachricht ist, deren Eingang auf dem Bildschirm angezeigt ist.

6. Verfahren nach Anspruch 5,
**dadurch gekennzeichnet,**
**dass** der Eingang durch ein der einen Textnachricht zugeordneten Infoicon angezeigt wird, wobei das Loslassen des Reaktivierungsicons über dem Infoicon den Inhalt der Textnachricht unmittelbar auf dem Bildschirm präsentiert,

7. Verfahren nach einem der vorherigen Ansprüche ,
**dadurch gekennzeichnet,**
**dass** das Reaktivierungsicon in seiner Gestaltung, insbesondere in Form und/oder Farbe, auf dem gesperrten Bildschirm eine besondere Augenfälligkeit aufweist,

8. Endgerät, insbesondere Mobiltelefon, mit einem Touch Screen Bildschirm zur Umsetzung des Verfahrens nach einem der vorhergehenden Ansprüche, wobei das Endgerät eine Funktion realisiert, in welcher der Touch Screen Bildschirm unsensibel gegenüber Berührungen ist,
**gekennzeichnet durch**
eine Entriegelungsfunktion aufweisend ein auf einem abgegrenzten Bereich des Bildschirms dargestelltes Reaktivierungsicon, das mit einer berührenden Geste über eine Grenze des Bereiches hinausziehbar ist, wobei das über die Grenze hinausgezogene und losgelassene Reaktivierungsicon eine Funktionalität des Endgerätes aktiviert.
